# EUROPEAN PATENT APPLICATION

(11) **EP 1 561 391 A1**
(43) Date of publication of application: **10.08.2005**
(21) Application number: 04027079.5
(22) Date of filing: 15.11.2004
(51) Int. Cl.: A43D 8/00, B05D 5/06

(54) **Method of obtaining pull-up effect rubber plates**

(30) Priority: 03.02.2004 IT VR20040012
(71) Applicant: Prialpas S.P.A., 37060 Sona (Verona) (IT)
(72) Inventor: Parolini, Giuseppe, 37121 Verona (IT)
(74) Representative: Reniero, Cirillo Silvano

(57) **Abstract**

A method of obtaining a rubber plate or tape, which comprises providing and heat vulcanizing two layers made of different mixtures, thereby obtaining a composite plate or tape, applying at least one layer of a finishing spreadable product suitable for providing a so-called pull-up effect onto at least one surface of said plate or tape thus-obtained, and applying mechanical stress to said plate or shoe sole obtained therefrom through die-cutting to determine a desired chromatic change of said pull-up effect product.

## Description

The present invention relates a method or process for obtaining a plate, preferably a composite plate, of vulcanized rubber, particularly for obtaining shoe soles, having "pull-up" features, i.e. they undergo chromatic changes when subjected to mechanical stress, such as bending or traction.

Such a method is suitable for rubber plates, particularly composite plates, and soles obtained from them and designed to be subjected to a number of working processes, e.g. die-cutting, milling and/or under edge trimming, to give thereto a non-flat shape at predetermined portions of the sole, e.g. at the plantar arch, and/or to obtain a peripheral rim "raising" slightly upward towards a shoe upper all along a sole edge, e.g. as disclosed in the Italian patent application VR2003A000096, filed on August 05, 2003 entitled "Composite robber plate" in the name of the applicant of the present invention.

The main object of the present invention is to provide a method of obtaining rubber plates, in particular composite rubber plates, from which a plurality of shoe soles can be obtained by die-cutting that can undergo a desired chromatic effect on the surface thereof during subsequent working operations.

Another object of the present invention is to provide a method suitable for ennobling a rubber plate and thus any shoe soles obtained therefrom.

Another object of the present invention is to provide a method relatively easy and inexpensive to be carried out, whereby not substantially affecting the production costs of a rubber sole.

According to a first aspect of the present invention, there is provided a method of obtaining a rubber plate, which includes providing and heat vulcanizing at least one layer comprising a number of different mixtures, whereby obtaining a tape or plate and is characterized in that it comprises
- applying at least one layer of spreadable finishing product suitable for providing a so-called pull-up effect onto at least one surface of said plate or tape thus obtained, and
- applying mechanical stress to said plate or to a shoe sole obtained therefrom through die-cutting to determine a desired chromatic change of said pull-up effect product.

Advantageously, the layer or layers of the pull-up effect product comprises a solution of waxes and oils or a dispersion of waxes or a varnish.

According to another aspect of the present invention, there is provided a rubber plate or sole obtained by the method according to the present invention and suitable for providing chromatic variation effects obtained by applying mechanical stresses to the plate or sole.

Further features and advantages of the present invention will better appear from the following detailed description of presently preferred embodiments thereof, given below by way of non-limiting examples on how to carry out the present invention.

### Example 1

A composite plate of vulcanized rubber was prepared and a coat or layer of an Arz-3-33 product, i.e. a varnish, (a solution of oils and waxes or a dispersion of hydrosoluble waxes), manufactured and commercialised by the company Stahl Itatia S.p.A. at Arzignano - Vicenza - Italy, was spayed directly onto the rubber plate. By subjecting the plate to a bending and/or pulling and/or compression action, a pull-up effect, i.e. a change of colour tonality or a permanent brightening in the mechanically stressed portion of the plate, is obtained.

The same effect is obtained by mechanically stressing a shoe sole obtained from a rubber composite plate as processed in the above described manner and subjected to a trimming operation.

### Example 2

A composite plate (two layer with different hardness) of vulcanized rubber having an overall thickness of 4 mm was produced. On such a plate a layer comprising 74% of transparent varnish Idropol 4417 manufactured by the company Polaris S.r.l. at Thiene - Vicenza - Italy, and 25% of Nero Special, manufactured by the company SIC S.p.A at Robbecchetto - Milan - Italy, was applied by spreading by means of an engraved-surface roll. Idropol 4417 is a transparent bright resin that when coloured with a Nero Special pigment generates a smooth and bright black primer.

The varnish was allowed to dry and while making use of a roll with an engraved surface a second layer of the above-mentioned Arz-3-33 varnish was spread onto it.

The second layer of varnish was allowed to dry and then a semi-bright finished surface with pull-up effect was obtained. When the surface is subjected to a bending stress, one obtains a brightening effect of grey tonalities.

### Example 3

A vulcanized rubber composite plate having a thickness of 3 mm was produced. On this plate a layer of Idropol 44004 Nero varnish, manufactured by the company Polaris S.r.l. was applied. When such a layer was dried, a second layer of varnish comprising 90% Arz-3-33 and 10% Ocra dye, manufactured by SIC S.p.A was applied onto it by means of a roll having an engraved surface.

The second layer of varnish was also allowed to dry and, using again an engraved surface roll, a third layer of Idropol 44017 was applied which produced a bright and transparent finish.

After drying of the third layer, a plate having a surface with a bright finish was obtained showing a light yellow brightening, when subjected to mechanical stress.

### Example 4

The procedure of the Example 3 was repeated, but a mono-layer plate of vulcanised rubber was used, thus obtaining the same results as in the Example 3.

The invention as described above is susceptible to numerous modifications and variations within its scope as defined by the claims.

## Claims

1. A method of obtaining a rubber plate or tape, which includes
providing and heat vulcanizing of at least one rubber mixture to obtain a tape or plate of vulcanized rubber, and
is **characterized in that** it comprises
- applying at least one finishing product layer suitable for providing a so-called "pull-up" effect onto at least one surface of said plate or tape, and
- applying mechanical stress to said plate or to a shoe sole obtained therefrom through die-cutting to determine a desired chromatic change of said pull-up effect product.

2. A method as claimed in claim 1, **characterized in that** each layer of pull-up effect product comprises a solution of waxes and oils.

3. A method as claimed in claim 1, **characterized in that** each layer of pull-up effect product comprises a dispersion of waxes.

4. A method as claimed in claim 2 or 3, **characterized in that** said pull-up effect product comprises Arz-3-33.

5. A method as claimed in claim 1, **characterized in that** each layer of pull-up effect product comprises at least one dying varnish.

6. A method as claimed in any previous claim, **characterized in that** it comprises applying at least one primer for said at least one layer of pull-up effect product.

7. A rubber plate or shoe sole when obtained by the method as claimed in any previous claim and provided with chromatic effects obtained by subjecting said plate or shoe sole to mechanical stress.

8. A rubber composite shoe sole including at least one layer of relatively hard rubber and a layer of relatively soft rubber, whereby said shoe sole can be subjected to at least one trimming operation, and coated with at least one layer of a pull-up effect product.
